# EUROPEAN PATENT SPECIFICATION

(11) **EP 2 741 343 B1**
(45) Date of publication and mention of the grant of the patent: **17.05.2017**
(21) Application number: 13195540.3
(22) Date of filing: 03.12.2013
(51) Int. Cl.: H01M 2/02, H01M 2/04, H01M 2/10, B60K 1/04, B60L 11/18

(54) **Battery pack with housing and reinforcement fittings and attachement members for a vehicle**
Batterie mit Gehäuse und Verstärkungselement sowie Befestigung für ein Fahrzeug
Batterie avec des raccords de logement et de renforcement et les membres de l' attachement pour un véhicule

(30) Priority: 04.12.2012 JP 2012265573
(43) Date of publication of application: 11.06.2014
(73) Proprietor: Mitsubishi Jidosha Kogyo K.K., Tokyo 108-8410 (JP)
(72) Inventor: Loo, Weng Ieong, Tokyo, Tokyo 108-8410 (JP); Takasaki, Seiichi, Tokyo, Tokyo 108-8410 (JP)
(74) Representative: Vossius & Partner Patentanwälte Rechtsanwälte mbB

(56) References cited:
- EP-A1- 2 528 134
- WO-A1-2012/063393
- JP-A- 2006 080 042
- US-A1- 2009 197 154

## Description

### BACKGROUND

The present invention relates to a battery pack which is mounted as a power source for an electric vehicle or the like, and more particularly to a battery pack which houses a plurality of battery cells.

A battery pack which is mounted on an electric vehicle, a hybrid electric vehicle, or the like to be used as a power source includes a plurality of battery cells and a case housing the battery cells. The case has tray and cover members which are molded from an electrically insulative material such as a synthetic resin. In the case of a large-capacity battery pack in which a plurality of battery cells are combined with one another, the case is required to have a sufficient strength which can withstand not only the weights of the battery cells themselves but also a collision load.

In a battery case of a battery unit which is mounted on the electric vehicle disclosed in Japanese Patent No. 4, 910, 964, an insert member is inserted into a synthetic resin which forms a tray member. The insert member is configured by a frame member and reinforcement plates which are made of a metal. The frame member is embedded in the outer circumferential wall of the tray member, and the reinforcement plates are embedded in partition walls which are disposed so as to pass between the battery cells.

The metal-made insert member, and the synthetic resin which covers the outer circumference thereof have different coefficients of thermal expansion due to a temperature change. When charging or discharging, the temperatures of the battery cells are raised, and therefore a shear stress is applied to the interface between the insert member and the synthetic resin. In the case of a long term use, there is a fear that a stress might be repeatedly applied to the interface. In Japanese Patent No. 4,910,964, therefore, holes which traverse through the reinforcement plates are disposed in order to prevent peeling from occurring in the interface.

In order to enable the insert member to exert the design strength as calculated, the insert member must be placed at a desired position when it is to be embedded in the synthetic resin. Therefore, the insert member is requested to have a highly accurate tolerance with respect to the insert member. Moreover, a production cost is entailed in associated works such as a work of placing the insert member in a jig for handling the insert member in a process of molding the synthetic resin in a mold, or that of placing the insert member in the mold.

The position and direction of a battery pack are different depending on the type of the vehicle on which the battery pack is to be mounted. Therefore, the strength which is requested in a battery pack depends on the type of the vehicle. In other words, a battery pack which is designed for a certain vehicle type cannot be applied as it is to another vehicle type. Battery packs respectively corresponding to vehicle types must be designed, and strength analysis, an evaluation test, and the like must be performed on each of the types. Moreover, different production lines for respective vehicle types must be prepared, and the production cost is increased.

There is a case where the strength of a battery pack must be reconsidered as a result of a change in the design of another portion of the vehicle. In this case, the battery pack in which the strength is reinforced by the insert member must be again produced. Depending on the shape of the insert member the design of which is changed, it may be required to change also the shape of a mold for performing a molding process on a synthetic resin. Even when the design is changed in a small degree, therefore, there is a case where the production cost is largely affected.

### SUMMARY

Therefore, the invention provides a battery pack in which the preset strength can be easily changed, and the production cost can be reduced.

According to the invention, there is provided a battery pack comprising: a tray including a first rib which is elongated in a first direction and a plurality of housing portions which are separated from each other by the first rib; a plurality of battery cells which are placed in the plurality of housing portions; and a reinforcement fitting which is attached to an edge of the first rib along the first direction.

According to the battery pack of the invention, the reinforcement fitting is attached in the direction of elongation of the rib which is formed between the plurality of battery cells. When an external force is applied which causes the battery cells to be moved in the housing portions of the tray to collide against the inner wall, therefore, a tensile load which acts along the rib is received by the reinforcement fitting. It is possible to prevent the tensile load from being concentrated in a portion where the inner wall and the rib are joined together, to break the portion.

In the configuration where the reinforcement fitting conforming to the necessary strength is attached, a battery pack having a strength matching the object can be produced. Since the reinforcement fitting is separately prepared, the reinforcement fitting can be easily replaced with that having a desired strength in the final assembling stage. Even when the strength required in the battery pack is changed in accordance with a change in the design of a vehicle, the change can be coped simply with replacement of the reinforcement fitting, and therefore it is possible to prevent the production cost from being increased.

When a reinforcement fitting having a different strength is selected, the strength of the battery pack can be changed. Even in the case where different strengths are requested for different vehicle types, when a reinforcement fitting having a corresponding strength is attached, therefore, the battery pack can be used in various vehicle types.

The battery pack may further comprise: a bracket which is configured to couple one of the plurality of battery cells to the tray. The tray may include: a pedestal which is projected from an inner circumferential wall of one of the plurality of housing portions in a vicinity of the first rib; and an anchor which is embedded in the pedestal, and the reinforcement fitting and the bracket may coupled to the anchor.

According to the battery pack of the invention in which the anchor is embedded in the pedestal that is projected from the inner circumferential wall of the housing portion in the vicinity of the rib, and the reinforcement fitting and the bracket are coupled to the anchor, a load which acts on the battery pack is directly transmitted from the bracket to the reinforcement fitting. Therefore, the load which is applied to the tray is reduced.

The bracket may be fixed to an upper end of the anchor exposed from the pedestal, and the reinforcement fitting may be attached to a shaft of the anchor exposed from the pedestal.

According to the battery pack of the invention in which the bracket is fixed to the upper end of the anchor exposed from the pedestal, and the reinforcement fitting is attached to the shaft of the anchor exposed from the pedestal, a torsion stress is reduced when the load due to the mass of the battery pack is transmitted from the bracket to the reinforcement fitting.

The battery pack may further comprise: a support on which the tray is mounted, and which is to be fixed to a vehicle. The tray may be fixed to the support by a fastening member which is attached to the anchor from a lower side.

According to the battery pack of the invention which includes the support on which the tray is mounted, and which is to be fixed to the vehicle, and in which the tray is fixed to the support by the fastening member that is attached to the anchor from the lower side, the load due to the mass of the battery pack is dispersed also to the support through the anchor.

The first direction may be a traveling direction of the vehicle.

According to the battery pack of the invention in which the rib disposed in the tray include a rib which is placed along the traveling direction of the vehicle, in the case where the vehicle on which the battery pack is mounted makes a front collision or is rear-ended, a load which acts in the direction along the rib is transmitted to the reinforcement fitting, whereby the load applied to the rib can be reduced.

The first direction may be a direction crossing a traveling direction of the vehicle.

The battery pack of the invention in which the rib disposed in the tray includes a rib which is placed along a direction crossing the traveling direction of the vehicle is effective in the case where, in the body structure of the vehicle on which the battery pack is mounted, the shock load applied in a side collision is larger than that applied in a front collision.

The reinforcement fitting may be attached to an upper side of the edge of the first rib.

The tray may include a second rib which is elongated in a second direction perpendicular to the first direction.

### BRIEF DESCRIPTION OF THE DRAWINGS

Fig. 1 is a perspective view showing a vehicle on which a battery pack of a first embodiment of the invention is mounted.
Fig. 2 is an exploded perspective view of the battery pack of Fig. 1.
Fig. 3 is a plan view of the battery pack of Fig. 1 in which a cover is detached.
Fig. 4 is a sectional view of the battery pack taken along a vehicle front-rear direction.
Fig. 5 is a sectional view taken along line F5-F5 in Fig. 4.
Fig. 6 is a perspective view in which a portion F6 in Fig. 3 is enlargedly shown.
Fig. 7 is a perspective view in which a portion F7 in Fig. 3 is enlargedly shown.
Fig. 8 is an exploded perspective view of a battery pack of a second embodiment of the invention.

### DETAILED DESCRIPTION OF EXEMPLARY EMBODIMENTS

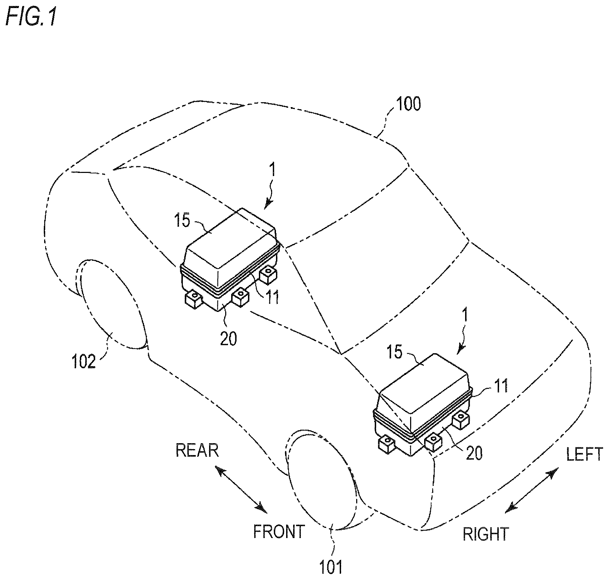

A battery pack 1 of a first embodiment of the invention will be described with reference to Figs. 1 to 7 by taking an example in which the battery pack is mounted on a vehicle 100. Two battery packs 1 are mounted on the vehicle 100 shown in Fig. 1. The vehicle 100 may be either of an electric vehicle or of a hybrid electric vehicle. In the embodiment, in the vehicle 100, the battery packs 1 are placed respectively between the front wheels 101, and between the rear wheels 102. Sheet-metal rectangular frames 20 which are supports for the battery packs 1 are fixed to the frame structure of the vehicle 100, such as side members and cross members.

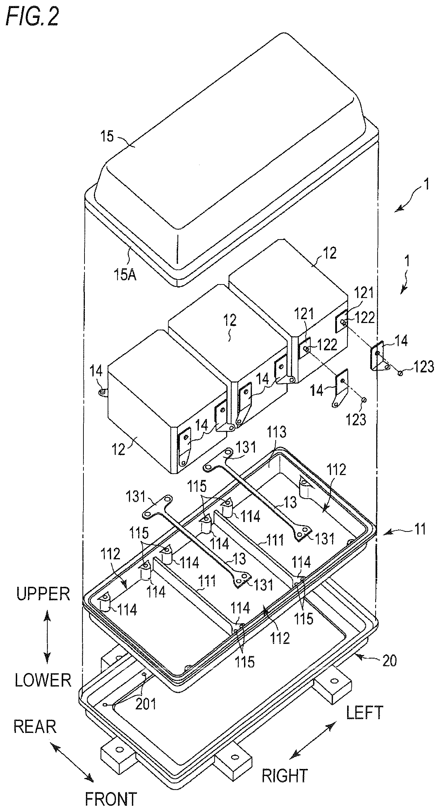

As shown in Fig. 2, each of the battery packs 1 includes a tray 11, battery cells 12, reinforcement fittings 13, brackets 14, a cover 15, and the sheet-metal rectangular frame 20. For the sake of convenience in description in the specification, the terms "FRONT", "REAR", "RIGHT", and "LEFT" are defined with respect to the traveling direction of the vehicle 100 as viewed from the driver. Moreover, "UPPER" and "LOWER" are defined with respect to the gravity.

The tray 11 has at least one rib 111, and a plurality of housing portions 112 which are separated from each other by the rib 111. In the embodiment, the tray 11 has two ribs 111 which are placed in parallel so as to evenly divide the interior of the tray 11 into three parts. The battery cells 12 are placed in housing portions 112 which are separated from each other by the ribs 111, respectively.

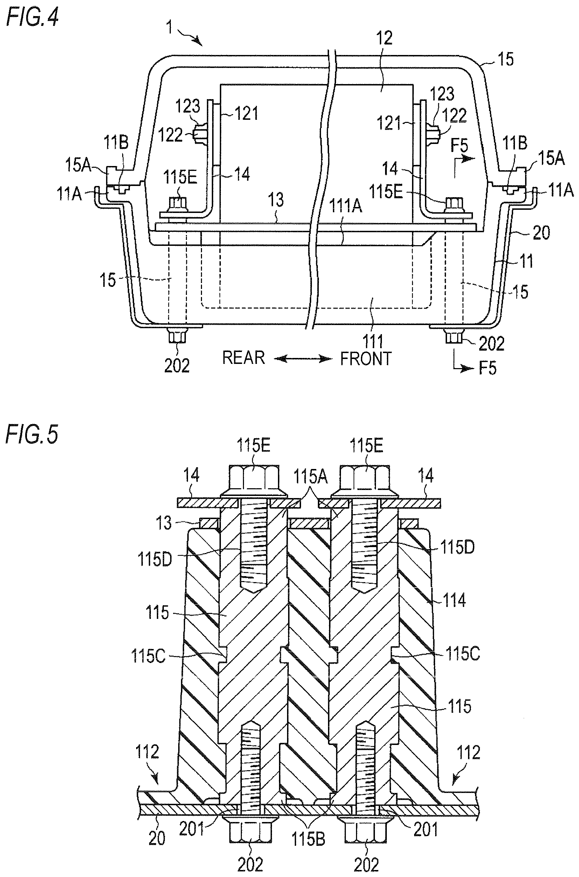

The tray 11 is integrally molded from a synthetic resin which has a high strength against a compression stress, in the embodiment, glass fiber reinforced polypropylene resin (PPGF) . The tray 11 has a flange 11A which is to be joined to the cover 15, at the outer circumferential edge. As shown in Fig. 4, the flange 11A has a groove 11B for attaching a gasket.

As shown in Figs. 2, 3, 6, and 7, each of the housing portions 112 has pedestals 114 on the inner circumferential wall 113 in the vicinities of the corresponding rib(s) 111. The pedestals 114 are projected from the inner circumferential wall 113, and the upper surfaces 114A are slightly higher than the edge 111A of the rib 111. The tray 11 has further pedestals 114 in places other than the vicinities of the rib. As shown in Fig. 5, anchors 115 are embedded in these pedestals 114, respectively.

In each of the anchors 115, as shown in Figs. 4 and 5, the upper end 115A is exposed from the corresponding pedestal 114. The anchor 115 is placed so that the lower end 115B is flush with the bottom surface of the tray 11. In an intermediate portion of the anchor 115, a groove 115C is formed in the outer circumferential portion in order to prevent the anchor from slipping out from the pedestal 114 made of a synthetic resin. In place of the groove 115C, a projection may be formed, or a knurling process may be applied to the whole portion.

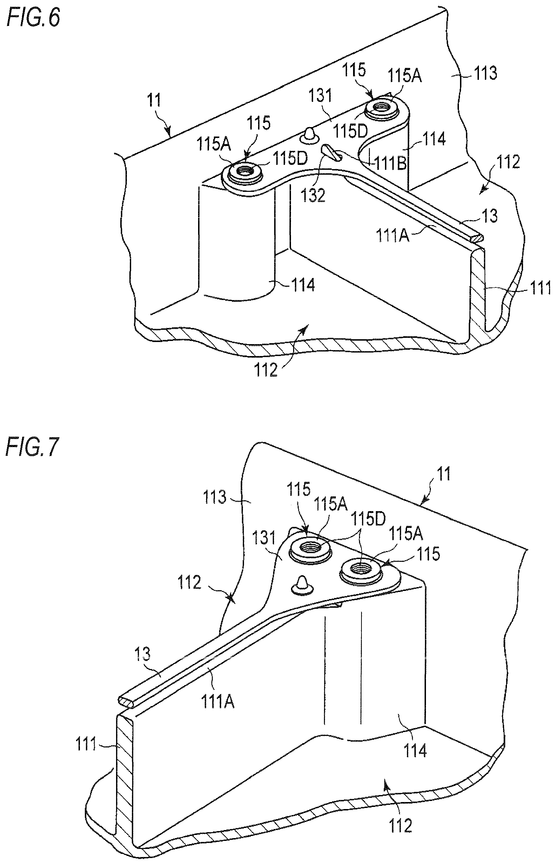

Each of the reinforcement fittings 13 is attached to the upper edge 111A of the corresponding rib 111 formed between the battery cells 12 along the direction of elongation of the rib 111. The reinforcement fitting 13 is configured by a flat metal-made plate. In end portions 131, holes which are to be coupled to the upper ends 115A of the anchors 115 are disposed. The reinforcement fitting 13 is attached to the shafts of the anchors 115 exposed from the pedestals 114. Since the pedestals 114 are slightly higher in level than the rib 111, the reinforcement fitting 13 is placed while forming a gap with respect to the edge 111A of the rib 111 as shown in Figs. 4, 6, and 7. As shown in Figs. 4 and 5, the dimensions of the portions of the anchors 115 exposed from the pedestals 114 are larger than the thickness of the reinforcement fitting 13. As shown in Figs. 6 and 7, therefore, the upper ends 115A of the anchors 115 are projected from the upper surface of the reinforcement fitting 13 in the state where the reinforcement fitting 13 is attached to the shafts of the anchors 115.

As shown in Fig. 4, the brackets 14 are attached between attaching portions 121 disposed on the sidewalls of the battery cells 12 which are opposed to the inner circumferential wall of the tray 11, and the upper ends 115A of the anchors 115. Therefore, the brackets 14 couple the battery cells 12 with the tray 11. As shown in Figs. 2 and 4, the attaching portions 121 have stud bolts 122. The brackets 14 are passed over the stud bolts 122 and fixed by nuts 123. As shown in Figs. 5, 6, and 7, screw holes 115D are disposed in the upper ends 115A of the anchors 115, and the brackets 14 are fixed by bolts 115E. Since the dimensions of the portions of the anchors 115 exposed from the pedestals 114 are larger than the thickness of the reinforcement fitting 13, gaps are formed between the reinforcement fitting 13 and the brackets 14 as shown in Figs. 4 and 5.

After the reinforcement fittings 13 and the battery cells 12 are mounted on the tray 11, and the brackets 14 are attached, the cover 15 is attached so as to cover these components. The cover 15 has a flange 15A corresponding to the flange 11A of the tray 11. The flange 11A of the tray 11, and the flange 15A of the cover 15 are firmly fixed to each other by clips or fasteners which are formed by plate springs.

As shown in Figs. 2 and 4, the sheet-metal rectangular frame 20 has a shape which approximately extends along the outer shape of the tray 11. As shown in Figs. 2, 4, and 5, the tray 11 to which the cover 15 is attached is mounted on the sheet-metal rectangular frame 20. The sheet-metal rectangular frame 20 has bolt holes 201 at positions corresponding to the anchors 115 of the tray 11. As shown in Figs. 4 and 5, the tray 11 is fixed to the sheet-metal rectangular frame 20 by bolts 202 functioning as fastening members which are attached to the anchors 115 from the lower side while being passed through the bolt holes 201 functioning as fixing holes. Alternatively, the anchors 115 may have stud bolts which are to be passed through the bolt holes 201, and nuts may be fastened to the stud bolts, whereby the tray 11 may be fixed to the sheet-metal rectangular frame 20. The connection of the anchors 115 to the sheet-metal rectangular frame 20 allows a load which is applied to the anchors 115, to be transmitted also to the sheet-metal rectangular frame 20.

In the thus configured battery pack 1, when the battery pack is mounted on the vehicle 100 in the direction indicated in Fig. 1, the ribs 111 are placed along the traveling direction of the vehicle 100. In the case where the vehicle 100 makes a front collision, a load due to the masses of the battery cells 12 is transmitted to the anchors 115 through the brackets 14. In the vehicle 100, at this time, the load acts to the front joined portions between the ribs 111 and the inner circumferential wall 113 in a direction along which a tensile stress is generated. In the case of the battery pack 1, the reinforcement fittings 13 are placed on the upper edges 111A of the ribs 111 in the direction of elongation of the ribs 111, and therefore the load transmitted to the anchors 115 is transmitted to the reinforcement fittings 13. As a result, the load acting on the ribs 111 is reduced.

In the case of the battery pack 1, the reinforcement fittings 13 are attached along the ribs 111. Even in the case where the battery pack 1 is required to have a higher strength in accordance with a change in the detail design of the vehicle 100, when the reinforcement fittings 13 are replaced with ones having a suitable strength, therefore, it is possible to easily satisfy the requirement. A change in the design of the battery pack 1, associated recalculation of the strength, and the like are simplified. Therefore, the influence on the production cost can be suppressed to the minimum.

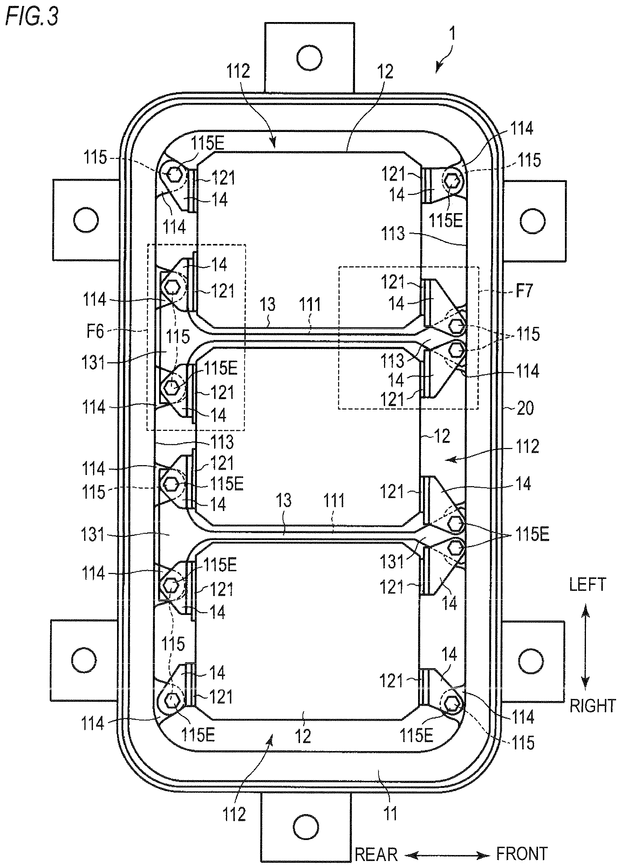

In consideration of the layout of cables and the like which are laid in the battery pack 1, as shown in Figs. 3, 6, and 7, the distance from one of the anchors 115 which are located on the front side in the traveling direction of the vehicle 100, to the corresponding rib 111 may be different from that from one of the anchors 115 which are located on the rear side in the traveling direction of the vehicle 100, to the corresponding rib 111. In the embodiment, the anchors 115 which are located on the front side in the traveling direction of the vehicle 100 are placed closer to the rib 111 than the anchors 115 which are located on the rear side in the traveling direction of the vehicle 100. Fig. 6 shows the anchors 115 which are located on the rear side of the vehicle 100, and the end portion 131 of the reinforcement fitting 13, and Fig. 7 shows the anchors 115 which are located on the front side of the vehicle 100, and the other end portion 131 of the reinforcement fitting 13.

In the case where, as described above, the distance from one of the anchors 115 which are located on the front side in the traveling direction of the vehicle 100, to the corresponding rib 111 is different from that from one of the anchors 115 which are located on the rear side in the traveling direction of the vehicle 100, to the corresponding rib 111, a stopper 111B which extends from the edge 111A of the rib 111, and which is engaged with the reinforcement fitting 13 may be disposed between the anchors 115 which are located on the side where the distance from one of the anchors 115 to the rib 111 is larger, namely, in the embodiment, which are on the side shown in Fig. 6 or the rear side in the traveling direction of the vehicle 100. The stopper 111B is formed into a hook-like shape in which a part of the edge 111A of the rib 111 is upward projected. Specifically, the portion which is opposed to the rear side in the traveling direction of the vehicle 100 is raised substantially vertically from the edge 111A of the rib 111, and another portion which is opposed to the front side in the traveling direction of the vehicle 100 is formed so that the upward distance from the edge 111A of the rib 111 is gradually shortened with increasing the distance from the portion opposed to the rear side. In other words, the cross section of the stopper taken in the direction extending along the rib 111 has a trapezoidal shape in which the rear side is vertical.

In the reinforcement fitting 13, a hole 132 which is to be engaged with the rear edge of the stopper 111B is formed at the position corresponding to the stopper 111B. The hole 132 is formed so as to be slightly larger than the stopper 111B in the traveling direction of the vehicle 100. The hole 132 is placed so that the inner surface of the rear side is in contact with the rear end of the stopper 111B which is vertically raised from the edge 111A of the rib 111.

Since the stopper 111B is disposed, the load due to the masses of the battery cells 12 is distributed also to the stopper 111B in addition to the anchors 115. Even in the case where the distances from the anchors 115 to the rib 111 are relatively large, the load which acts on the reinforcement fitting 13 disposed between the anchors 115 in the traveling direction of the vehicle 100 or in this case, the forward direction can be reduced because the stopper 111B is disposed. When the reinforcement fitting 13 is forwardly pulled, namely, it is possible to prevent the end portion 131 of the reinforcement fitting 13 disposed between the anchors 115 on the rear side, from being bent toward the front side of the vehicle 100. In the case where the distances from the anchors 115 to the rib 111 are large as described above, it is preferred to dispose the stopper 111B on the edge 111A of the rib 111.

The embodiment has been exemplarily described in which the stopper 111B is disposed on the rib 111 between the anchors 115 that are located on the rear side in the traveling direction of the vehicle 100. In the case where the distances from the anchors 115 located on the front side in the traveling direction of the vehicle 100, to the rib 111 are large, the stopper 132 may be disposed on the rib 111 between the anchors 115 that are located on the front side in the traveling direction of the vehicle 100. In this case, the stopper 132 is placed so that the end of the stopper opposed to the front side of the vehicle 100 is vertical, and engaged with a hole disposed in the reinforcement fitting 13. In the case where the distances from the anchors 115 to the rib 111 are larger than a predetermined value, the stoppers 132 may be disposed on both the front and rear sides in the traveling direction of the vehicle 100, respectively.

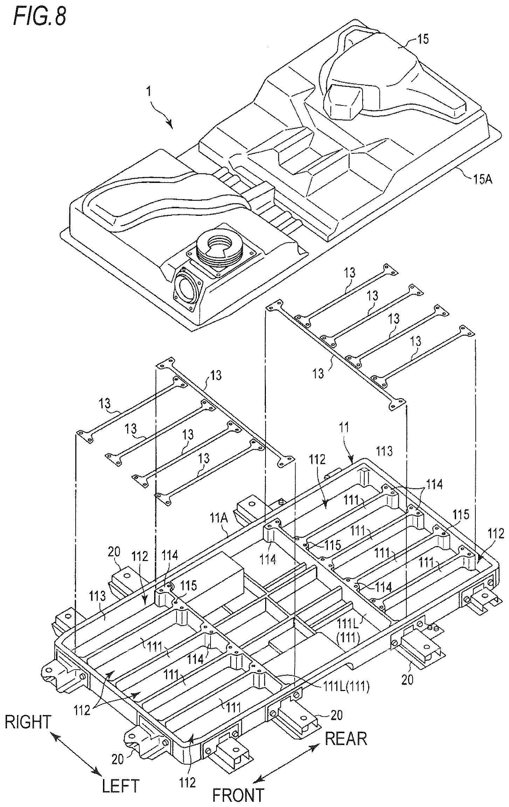

A battery pack 1 of a second embodiment of the invention will be described with reference to Fig. 8. In the second embodiment, the components which have the same functions as the battery pack 1 of the first embodiment are denoted by the same reference numerals as those in the configuration of the first embodiment, and, in the detailed description, the corresponding description of the battery pack 1 of the first embodiment will be referred. In Fig. 8, illustration of the battery cells 12 is omitted. The battery cells 12 are placed in the housing portions 112 which are separated from each other by the ribs 111, respectively. The shapes of the bracket 14 for fixing the battery cells 12 to the tray 11 are identical with those shown in Figs. 2 to 4, and the details of the anchors 115 are identical with those shown in Fig. 5.

In the battery pack 1 of the second embodiment shown in Fig. 8, two kinds of ribs 111, i.e., the ribs 111 which are placed along the traveling direction of the vehicle 100, and ribs 111L (111) which are placed in a direction crossing the traveling direction of the vehicle 100 are disposed in the tray 11. The pedestals 114 which are projected into the housing portions 112 are formed in end portions of the ribs 111. The anchors 115 are embedded in the pedestals 114, respectively. The reinforcement fittings 13 are attached to the upper sides of the ribs 111.

In the thus configured battery pack 1 of the second embodiment, in the case where the vehicle 100 makes a front collision, a load due to the masses of the battery cells 12 is transmitted to the reinforcement fittings 13 which are placed above the edges 111A of the ribs 111 in the direction of elongation of the ribs 111 that elongate in the traveling direction of the vehicle 100, and therefore it is possible to prevent the tray 11 from being damaged. Furthermore, the reinforcement fittings 13 are attached to the rib 111L which elongate in the direction crossing the traveling direction of the vehicle 100. Also in the case where the vehicle 100 is laterally hit by another vehicle, therefore, a load applied to the tray 11 is transmitted to the reinforcement fittings 13 in a similar manner as the case of a front collision, and it is possible to prevent the tray 11 from being damaged.

In the case where the battery pack 1 is requested to have a higher strength in accordance with a change in the design of the vehicle 100, when the reinforcement fittings 13 are replaced with ones having a suitable strength, it is possible to easily make a change so as to satisfy the requirement.

## Claims

1. A battery pack (1) **characterized by** comprising:
a tray (11) including a first rib (111)which is elongated in a first direction and a plurality of housing portions (112) which are separated from each other by the first rib (111);
a plurality of battery cells (12) which are placed in the plurality of housing portions (112); and
a reinforcement fitting (13) which is attached to an upper edge of the first rib (111) along the first direction.

2. The battery pack (1) according to claim 1, characterized further comprising:
a bracket (14) which is configured to couple one of the plurality of battery cells (12) to the tray (11), wherein
the tray (11) includes: a pedestal (114) which is projected from an inner circumferential wall (113) of one of the plurality of housing portions (112) in a vicinity of the first rib (111); and an anchor (115) which is embedded in the pedestal (114), and
the reinforcement fitting (13) and the bracket (14) are coupled to the anchor (115).

3. The battery pack (1) according to claim 2, **characterized in that**
the bracket (14) is fixed to an upper end of the anchor (115) exposed from the pedestal (114), and
the reinforcement fitting (13) is attached to a shaft of the anchor (115) exposed from the pedestal (114).

4. The battery pack (1) according to claim 2 or 3, **characterized by** further comprising:
a support (20) on which the tray (11) is mounted, and which is to be fixed to a vehicle, wherein
the tray (11) is fixed to the support (20) by a fastening member (202) which is attached to the anchor (115) from a lower side.

5. The battery pack (1) according any of to claims 1 to 4, **characterized in that** the first direction is a traveling direction of the vehicle.

6. The battery pack according to any of claims 1 to 4, **characterized in that** the first direction is a direction crossing a traveling direction of the vehicle.

7. The battery pack according to any of claims 1 to 4, **characterized in that** the tray (11) includes a second rib (111L) which is elongated in a second direction perpendicular to the first direction.

## Patentansprüche

1. Batteriesatz (1), **dadurch gekennzeichnet, dass** er aufweist:
einen Trog (11) mit einer ersten Rippe (111), die sich in einer ersten Richtung erstreckt, und mehreren Aufnahmeabschnitten (112), die durch die erste Rippe (111) voneinander getrennt sind;
mehrere Batteriezellen (12), die in den mehreren Aufnahmeabschnitten (112) platziert sind; und
ein Verstärkungspassstück (13), das an einer Oberkante der ersten Rippe (111) entlang der ersten Richtung angebracht ist.

2. Batteriesatz (1) nach Anspruch 1, **dadurch gekennzeichnet, dass** er ferner aufweist:
eine Halterung (14), die so konfiguriert ist, dass sie eine der mehreren Batteriezellen (12) mit dem Trog (11) koppelt, wobei
der Trog (11) aufweist: einen Sockel (114), der von einer Innenumfangswand (113) eines der mehreren Aufnahmeabschnitte (112) in einer Umgebung der ersten Rippe (111) vorsteht; und einen Anker (115), der im Sockel (114) eingebettet ist, und
das Verstärkungspassstück (13) und die Halterung (14) mit dem Anker (115) gekoppelt sind.

3. Batteriesatz (1) nach Anspruch 2, **dadurch gekennzeichnet, dass**
die Halterung (14) an einem oberen Ende des Ankers (115) befestigt ist, das aus dem Sockel (114) freiliegt, und
das Verstärkungspassstück (13) an einem Schaft des Ankers (115) angebracht ist, der aus dem Sockel (114) freiliegt.

4. Batteriesatz (1) nach Anspruch 2 oder 3, **dadurch gekennzeichnet, dass** er ferner aufweist:
eine Stütze (20), auf der der Trog (11) angebaut ist und die an einem Fahrzeug zu befestigen ist, wobei
der Trog (11) an der Stütze (20) durch ein Befestigungsteil (202) befestigt ist, das am Anker (115) von einer Unterseite angebracht ist.

5. Batteriesatz (1) nach einem der Ansprüche 1 bis 4, **dadurch gekennzeichnet, dass** die erste Richtung eine Fahrtrichtung des Fahrzeugs ist.

6. Batteriesatz nach einem der Ansprüche 1 bis 4, **dadurch gekennzeichnet, dass** die erste Richtung eine Richtung ist, die eine Fahrtrichtung des Fahrzeugs kreuzt.

7. Batteriesatz nach einem der Ansprüche 1 bis 4, **dadurch gekennzeichnet, dass** der Trog (11) eine zweite Rippe (111L) aufweist, die sich in einer zweiten Richtung senkrecht zur ersten Richtung erstreckt.

## Revendications

1. Module de batterie (1) **caractérisé en ce qu'**il comprend :
un plateau (11) qui inclut une première nervure (111) qui est allongée dans une première direction et une pluralité de parties de logement (112) qui sont séparées les unes des autres par la première nervure (111) ;
une pluralité de cellules de batterie (12) qui sont placées dans la pluralité de parties de logement (112) ; et
un accessoire de renforcement (13) qui est lié à un bord supérieur de la première nervure (111) suivant la première direction.

2. Module de batterie (1) selon la revendication 1, **caractérisé en ce qu'**il comprend en outre :
un support (14) qui est configuré de manière à coupler l'une de la pluralité de cellules de batterie (12) au plateau (11), dans lequel :
le plateau (11) inclut : un socle (114) qui fait saillie depuis une paroi périphérique interne (113) de l'une de la pluralité de parties de logement (112) au voisinage de la première nervure (111) ; et un ancrage (115) qui est intégré dans le socle (114), et
l'accessoire de renforcement (13) et le support (14) sont couplés à l'ancrage (115).

3. Module de batterie (1) selon la revendication 2, **caractérisé en ce que** :
le support (14) est fixée à une extrémité supérieure de l'ancrage (115) exposée depuis le socle (114), et
l'accessoire de renforcement (13) est lié à un arbre de l'ancrage (115) exposé depuis le socle (114).

4. Module de batterie (1) selon la revendication 2 ou 3, **caractérisé en ce qu'**il comprend en outre :
un support (20) sur lequel le plateau (11) est monté, et qui doit être fixé à un véhicule, dans lequel :
le plateau (11) est fixé au support (20) par un élément d'assemblage (202) qui est lié à l'ancrage (115) depuis un côté inférieur.

5. Module de batterie (1) selon l'unedes revendications 1 à 4, **caractérisé en ce que** la première direction est une direction de déplacement du véhicule.

6. Module de batterie selon l'une des revendications 1 à 4, **caractérisé en ce que** la première direction est une direction qui croise une direction de déplacement du véhicule.

7. Module de batterie selon l'une des revendications 1 à 4, **caractérisé en ce que** le plateau (11) inclut une seconde nervure (111L) qui est allongée dans une seconde direction perpendiculaire à la première direction.
